(19) Europäisches Patentamt

European Patent Office

Office européen des brevets

(11) Publication number: **0 289 303 B1**

(12) **EUROPEAN PATENT SPECIFICATION**

(45) Date of publication of patent specification: **07.10.92** (51) Int. Cl.⁵: **G01F 23/26**, G01F 23/00

(21) Application number: **88303840.8**

(22) Date of filing: **28.04.88**

(54) Liquid quantity determining apparatus and method.

| | |
|---|---|
| (30) Priority: **28.04.87 US 43500** | (73) Proprietor: **SIMMONDS PRECISION PRO-DUCTS INC.**<br>**150 White Plains Road**<br>**Tarrytown New York 10591(US)** |
| (43) Date of publication of application:<br>**02.11.88 Bulletin 88/44** | |
| (45) Publication of the grant of the patent:<br>**07.10.92 Bulletin 92/41** | (72) Inventor: **Maier, Lawrence Carl**<br>**RD No. 1**<br>**Middlebury Vermont 05753(US)** |
| (84) Designated Contracting States:<br>**DE FR GB IT** | |
| (56) References cited:<br>**US-A- 4 373 390** | (74) Representative: **Foster, David Martyn et al**<br>**MATHISEN MACARA & CO. The Coach**<br>**House 6-8 Swakeleys Road**<br>**Ickenham Uxbridge UB10 8BZ(GB)** |

## Description

The invention relates to apparatus for determining the quantity of a liquid in a liquid-containing tank having at least two possible attitudes relative to the gravity vector, comprising liquid-level sensing probes in the tank, each probe producing for each said attitude of the tank a respective output which varies in dependence on the fraction of it which is immersed in the liquid and which is related to the quantity of liquid in the tank in a manner dependent on the shape of the tank and the relative position of the probe within the tank, determining means responsive to the outputs for determining for each probe an output value representative of the fraction thereof which is immersed in the liquid at a particular measuring time, memory means having a plurality of addressable storage locations each storing liquid-quantity-representing data for a particular output value of a respective one of the probes, addressing means responsive to the particular said attitude of the tank, to the respective positions of the probes in the tank and to the current said output values of each probe for accessing for each probe a respective one of the storage locations and reading the data therein, and output means responsive to all the read data for indicating the quantity of liquid in the tank.

The invention also relates to a method for determining the quantity of a liquid in a liquid-containing tank having at least two possible attitudes relative to the gravity vector and liquid-level sensing probes in the tank, each probe producing for each said attitude of the tank a respective output which varies in dependence on the fraction of it which is immersed in the liquid and which is related to the quantity of liquid in the tank in a manner dependent on the shape of the tank and the relative position of the probe within the tank, comprising the steps of storing, in each of a plurality of addressable storage locations, liquid-quantity-representing data corresponding to a particular output value of a respective one of the probes, determining for each probe the output value representative of the fraction thereof which is immersed in the liquid at a particular time, responding to the particular said attitude of the tank, to the respective positions of the probes in the tank and to the current said output values of each probe by accessing for each probe a respective one of the storage locations, and reading the data in each accessed storage location, and indicating the quantity of liquid in the tank in response to all the read data.

One such apparatus and method is known from US-A-4 373 390. In such prior apparatus and method, the manner in which the relevant data is obtained from the memory means is complicated and involves the extensive use of a microprocessor. The invention aims to overcome this problem.

Accordingly, the apparatus as set forth above characterised in that the storage locations are arranged in groups one group for each of the said attitudes of the tank and are arranged in sub-groups within each said group, one sub-group for each of the probes, with the storage locations being arranged sequentially within each sub-group with one storage location therein for each of the output values of the respective probe, and in that the addressing means locates a particular one of the storage locations in response to each probe output value by means of a first address offset representative of the attitude of the tank so as to locate the corresponding group of storage locations, a second address offset representative of the position of the particular probe in the tank so as to locate the corresponding sub-group, and an address within that sub-group dependent on the probe output value.

Similarly, the method as set forth above is characterised by the steps of arranging the storage locations in groups one for each of the said attitudes of the tank, arranging them within sub-groups in each said group, one sub-group for each of the probes, with the storage locations being arranged sequentially within each sub-group with one storage location therein for each of the output values of the respective probe, and locating a particular one of the storage locations in response to each probe output value by means of a first address offset representative of the attitude of the tank so as to locate the corresponding group of storage locations, a second address offset representative of the position of the particular probe in the tank so as to locate the corresponding sub-group, and an address within that sub-group dependent on the probe output value.

The subject matter of this application is related to that disclosed in co-pending European Patent Application No. 88303383.9 corresponding to U.S. Patent Application Serial No. 042229, filed 24th April 1987, the disclosure of which is incorporated herein by reference.

A liquid level sensing apparatus or system embodying the invention, and methods according to the invention for liquid level sensing, will now be described, by way of example only, with reference to the accompanying drawings in which:

Figure 1 is schematic block diagram of the system;

Figure 2 is an illustrative representation of the memory topology of the memory in the apparatus of Figure 1 in which the left hand column represents an address (in decimal) and the right hand column represents stored liquid quantity information; and

Figure 3 is a flow diagram of the addressing sequence of the memory of Figure 1.

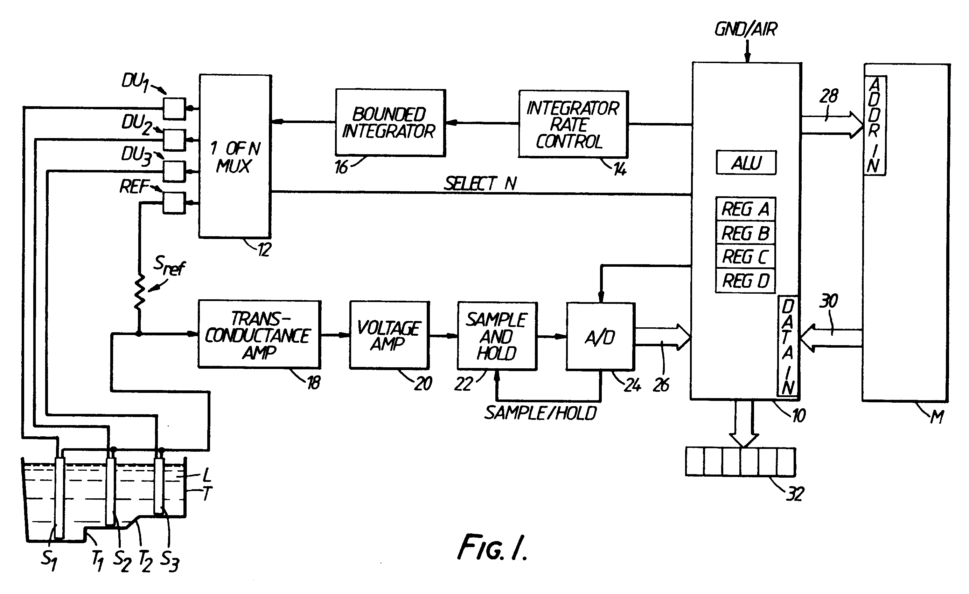

As shown in Fig. 1 a system control and processing unit 10 provides output control signals to a one-of-N multiplexer 12 and an integrator rate controller 14, which, in turn, provides rate control signals to a bounded integrator 16. The bounded integrator 16 provides symmetrical voltage limits of opposite polarity, for example of +10 and -10 VDC, with the rate of change of the output between these two limits controlled by the integrator rate controller 14 under instruction from the system control and processing unit 10 to provide an interrogation waveform as described in accordance with the above-incorporated co-pending patent application. The multiplexer 12 is of a 1-of-N type under the control of the system control and processing unit 10 and provides the voltage output of the bounded integrator 16 to a selected one of the N output lines. A reference driver unit REF and a plurality of driver units $DU_1$ ... $DU_n$, of which only $DU_1$, $D_2$ and $D_3$ are illustrated, are connected to the various output lines of the multiplexer 12. The reference driver unit REF is connected to a sensor reference $S_{ref}$ having a predetermined or otherwise known resistance characteristic $R_{ref}$, and the various driver units $DU_1$ ... $DU_3$ are connected to respective sensor probes $S_1$ ... $S_3$.

The sensor probes $S_1$ ... $S_3$ are shown immersed in a liquid L contained in a tank T having an irregular cross-section to illustrate the manner by which nonlinearities are introduced into the output of a sensor probe having generally linear response characteristics. The irregular cross section of the tank T includes a first, vertical step $T_1$ in the bottom wall of the tank T between the sensor probes $S_1$ and $S_2$ and a second, inclined ramp surface $T_2$ between the sensor probes $S_2$ and $S_3$. In the preferred embodiment, the sensor probes $S_1$ ... $S_3$ are used to determine fuel quantities in one or more aircraft fuel tanks, which typically have irregular shapes and different attitudes relative to the gravity vector depending upon whether the aircraft is in flight or on the ground.

Each of the sensor probes $S_n$ has capacitive and resistive characteristics which vary as a function of the environmental characteristics to be measured. For example, the sensor probes $S_n$ can be formed as concentric cylindrical capacitive elements in which the capacitance varies in a generally linear manner as a function of the fraction of the sensor probe $S_n$ which is wetted by the liquid between the capacitive elements. While the various sensor probes $S_1$ ... $S_3$ have a generally linear output characteristic with rising liquid L level, the irregularities in the tank T shape can introduce irregularities in the output of the sensor probes $S_1$ ... $S_3$, as explained below.

The various sensor probes $S_n$ are connected in common circuit with one another and to the input of a transconductance amplifier 18 which converts the current flow of a selected sensor probe $S_n$, or of the sensor reference $S_{ref}$, to a voltage for amplification by a voltage amplifier 20. A sample and hold circuit 22 accepts the output of the voltage amplifier 20 at selected times during the application of the voltage waveform provided through the multiplexer 12 from the bounded integrator 16. An analog-to-digital converter 24 accepts, under the control of the system control and processing unit 10, the output of the sample and hold circuit 22 and provides a corresponding binary value along a data bus 26 to an input of the system control and processing unit 10.

The system control and processing unit 10 may be stored-program-controlled and includes an arithmetic and logic unit ALU as well as various instruction and data registers for carrying out the liquid level quantity determinations as described below.

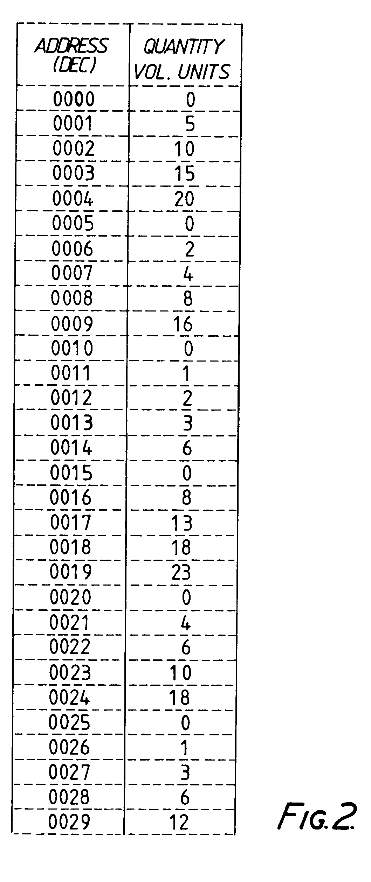

Additionally, the system control and processing unit 10 is connected to a memory, characterized in general form by the reference character M, which includes a plurality of addressable memory locations containing liquid quantity information, as explained more fully below in relation to Fig. 2. The memory M includes an address input port which receives address information from the system control and processing unit 10 through an address bus 28 and provides the addressed data along a data bus 30 to a data input port of the system control and processing unit 10. While the memory M has been shown as a separate functional block from the system control and processing unit 10, the memory M can be combined with the system control and processing unit 10 as an integrated circuit.

An output device 32, which may take the form of a multi-digit BCD display, is connected to the system control and processing unit 10 and provides an indication of the liquid level output. While not shown, the output device may also take the form of a printer to provide a hard copy output.

The irregular shape of the exemplary tank T shown in Fig. 1 introduces discontinuities and nonlinearities in the output of the various sensor probes $S_n$ depending upon their relative location. For example, the sensor probe $S_1$ will provide a relatively linear output with a rising level of the liquid L from the lowermost portion of the tank T bottom until the level of the liquid L attains and surmounts the step $T_1$ after which the output of the sensor probe $S_1$ will change in a discontinuous or near discontinuous manner in accordance with another relationship relative to the rising liquid L level. In contrast to the sensor probe $S_1$, the sensor probe $S_2$ will provide a nonlinear output with rising liquid L because of the inclined ramp surface $T_2$ until the liquid L attains and surmounts the ramp surface $T_2$ after which the output will be essentially linear. Lastly, the output of the sensor probe $S_3$ will be essentially linear with rising liquid level through its entire operating length. As can be appreciated, the output of the sensor probes $S_n$ and the relative linearity or nonlinearity will be altered by a change in attitude of the tank T. In the context of an aircraft fuel tank, the output of the sensor probes $S_n$ will change depending upon whether the aircraft is in a first attitude, e.g., level flight with a slight nose-up pitch or in a second attitude, e.g., on the ground with a slight nose-down pitch.

The embodiment of Fig. 1 operates to poll selectively the sensor reference $S_{ref}$ and the various sensor probes $S_n$. For example, the system control and processing unit 10 controls the multiplexer 12 to select the sensor reference $S_{ref}$ and controls the bounded integrator 16 to provide an interrogation voltage waveform, as described in the above-incorporated co-pending application, through the reference driver unit REF to the sensor reference $S_{ref}$. The current drawn through the sensor reference $S_{ref}$ is converted by the transconductance amplifier 18 to a voltage which, in amplified form through the voltage amplifier 20, is fed to the sample and hold circuit 22 for conversion to a binary value and presentation to the system control and processing unit 10. In a similar manner, the sensor probes $S_1$ ... $S_3$ are likewise interrogated to provide the system control and processing unit 10 with information indicating the fraction (e.g. 0.85) of the particular sensor probe $S_n$ wetted by the liquid L.

As shown in Fig. 2, the memory M of Fig. 1 is illustrated as having thrity contiguous addressable memory locations 0000 to 0029 (decimal) with a first set of fifteen memory locations 0000 to 0014 containing three groups of five memory locations for the sensor probes $S_1$, $S_2$, and $S_3$, and a second set of fifteen memory locations 0015 to 0029 defining an additional three groups of five memory locations for the sensor probes $S_1$, $S_2$ and $S_3$. The first set of memory locations 0000 to 0014 contains fuel quantity information for the sensor probes $S_1$, $S_2$ and $S_3$ when the tank T is in a first attitude corresponding to, for example, when the aircraft is in an on-the-ground attitude, and the second set of memory locations contains fuel quantity information for the sensor probes $S_1$, $S_2$ and $S_3$ when the tank T is in a second attitude corresponding to the aircraft in flight. The three groups of memory locations in the first set, addresses 0000 to 0014, include address group 0000 to 0004 containing corresponding fuel quantity information for the first sensor $S_1$ when aircraft is in the first attitude, address group 0005 to 0009 containing corresponding fuel quantity information for the second sensor $S_2$ when aircraft is in the first attitude, and address group 0010 to 0014 containing corresponding fuel quantity information for the third sensor $S_3$, also when aircraft is in the first attitude. In an analogous manner, the three groups of memory locations in the second set, addresses 0015 to 0029, include address group 0015 to 0019 containing corresponding fuel quantity information for the first sensor $S_1$ when aircraft is in the second attitude, address group 0020 to 0024 containing corresponding fuel quantity information for the second sensor $S_2$ when aircraft is in the second attitude, and address group 0025 to 0029 containing corresponding fuel quantity information for the third sensor $S_3$, also when aircraft is in the second attitude. In the disclosed embodiment, the addresses within each group are sequential; however, the stored fuel quantity information is generally not linear with the sequentially increasing addresses and preferably follows the nonlinearity or discontinuity of the particular tank T configuration, as represented, for example, in address locations 0025 to 0029.

The memory topology presented in Fig. 2 is for the purpose of illustration only and actual memory addressing is typically accomplished in hexadecimal.

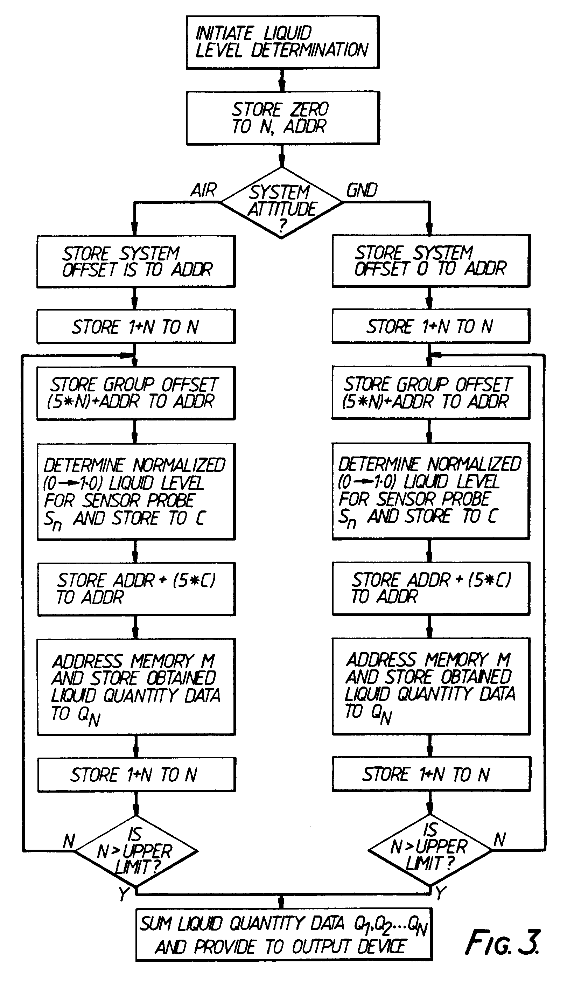

In order to obtain fuel quantity information, the interrogation circuit of Fig. 1 provides an information value which is representative of the fraction of the sensor probe $S_n$ wetted by the liquid as disclosed in the above-incorporated co-pending application. This value combined with information representative of attitude of the fuel tank and the particular sensor probe $S_n$ provides an address for the memory M and provides the desired liquid level output information in accordance with the flow diagram of Fig. 3. As shown therein, the sequence is initiated by storing the value zero for variables N and ADDR where N is the identity of the sensor and ADDR the memory address. A query is then presented as to the system attitude and where the system attitude, in the context of the best mode, indicates an airborne attitude, the sequence branches to the leftward operational path. Conversely, where the system attitude is ground based, the sequence branches to the rightward operational path. If the system is in an airborne attitude, the system memory offset of fifteen is added to the variable ADDR. Thereafter the variable N is incremented and an address group offset that is a function of the sensor probe number and the number of address locations in each group (i.e., five) is added to the variable ADDR. The fraction of the N th sensor probe wetted by the liquid is then determined (or recalled from a memory location) and multiplied by the number of address locations in the group with the result added to variable ADDR. The resulting cumulative address variable is then used to address the memory M and the readout liquid quantity information stored to a variable $Q_n$.

A specific example will now be considered.

The status of the system is first determined, in this case whether the aircraft is on the ground or in the air. Ground corresponds to an address offset of 0, air corresponds to an address offset of 15. Then the sensor whose value is desired is selected. In this case, Sensor 1 has an address offset of 0, Sensor 2 has an address offset of 5, and Sensor 3 has an address offset of 10. Finally, the height of fuel at each sensor is measured in a linear fashion. The resulting value is a fraction from 0 to 1 which is multiplied by 5 (in this example - the actual value is dependent on the actual table construction).

For purposes of example, assume that Sensor 1 is covered 0.4, Sensor 2 is covered by 0.6, and Sensor 3 is covered by 0.7. Also assume that the system determines that it is in the air. The address is computed by:

address of data = (system offset) + (probe offset)- + (probe fluid height)

In the example:
Sensor 1 data address = $15 + 0 + 5^*0.4 = 17$

address 17 data = 13 volume units, where each volume unit is 3.785 litres (1 United States gallon)
Sensor data address = $15 + 5 + 5^*0.6 = 23$

address 23 data = 10 volume units
Sensor 3 data address = $15 + 10 + 5^*0.7 = 28.5$

address 28 data = 6 volume units

address 29 data = 12 volume units

therefore address 28.5 data = 9 volume units using linear interpolation
The liquid quantity is the sum of the individual quantities. Thus in this example, the total liquid quantity is $13 + 10 + 9 = 32$ volume units.

The sequence of Fig. 3 thus advantageously provides an instruction sequence for obtaining fuel quantity information as a function of summed value of the system offset, the sensor probe offset, and a value representative of the number of address locations in each address group multiplied by the wetted fraction of the sensor probe.

The memory topology shown in Fig. 2 is illustrative only and, for reasons of exposition, does not represent an actual memory topology. In actual practice, a several hundred or thousand contiguous memory address locations would be provided to store corresponding liquid level or quantity information so that fine gradations of liquid level or quantity information would be available for the smallest changes in the fractions of the sensor probe wetted by the liquid. If desired, where a numeric address is ascertained, as described above, and does not precisely correspond to an existing address, the next lower or higher address can be used or interpolation between tabular values used.

As can be appreciated, the method and apparatus described provides for the accurate determination of liquid quantities in a liquid containing tank where the relationship between liquid level and liquid quantity is nonlinear and/or of a discontinuous nature and which the attitude of the liquid containing tank and probes can vary relative to the gravity vector.

Thus it will be appreciated from the above that as a result of the present invention, a highly effective apparatus and method for determining liquid levels is provided by which the principal objective, among others, is completely fulfilled. It will be equally apparent and is contemplated that modification and/or changes may be made in the illustrated embodiment without departure from the invention. Accordingly, it is expressly intended that the foregoing description and accompanying drawings are illustrative of preferred embodiments only, not limiting, and that the true scope of the present invention will be determined by reference to the appended claims and their legal equivalent.

## Claims

1. Apparatus for determining the quantity of a liquid in a liquid-containing tank (T) having at least two possible attitudes relative to the gravity vector, comprising N liquid-level sensing probes ($S_1$ ... $S_n$) in the tank (T), each probe ($S_1$ ... $S_n$) producing for each said attitude of the tank (T) a respective output which varies in dependence on the fraction of it which is immersed in the liquid and which is related to the quantity of liquid in the tank (T) in a manner dependent on the shape of the tank (T) and the relative position of the probe within the tank (T), determining means (12,18,20,22) responsive to the outputs for determining for each probe an output value representative of the fraction thereof which is immersed in the liquid at a particular measuring time, memory means (M) having a plurality of addressable storage locations each storing liquid-quantity-representing data for a particular output value of a respective one of the probes ($S_1$ ... $S_n$), addressing means (28) responsive to the particular said attitude of the tank (T), to the respective positions of the probes in the tank (T) and to the current said output values of each probe for accessing for each probe a respective one of the storage locations and reading the data therein, and output means responsive to all the read data for indicating the quantity of liquid in the tank (T), characterised in that the storage locations are arranged in groups one group for each of the said attitudes of the tank and are arranged in sub-groups within each said group, one sub-group for each of the probes $(S_1 \ldots S_n)$, with the storage locations being arranged sequentially within each sub-group with one storage location therein for each of the output values of the respective probe $(S_1 \ldots S_n)$, and in that the addressing means (28) locates a particular one of the storage locations in response to each probe output value by means of a first address offset representative of the attitude of the tank so as to locate the corresponding group of storage locations, a second address offset representative of the position of the particular probe $(S_1 \ldots S_n)$ in the tank (T) so as to locate the corresponding sub-group, and an address within that sub-group dependent on the probe output value.

2. Apparatus according to claim 1, characterised by accumulator means for summing, for a particular measuring time, the liquid quantity values obtained from the addressed storage locations respective to each of the probes $(S_1 \ldots S_n)$.

3. Apparatus according to claim 1 or 2, characterised in that the determining means comprises stored-program controlled processor means (10) for determining a value representative of the fraction of each of said probes $(S_1 \ldots S_n)$ immersed in the liquid, the processor means also incorporating the addressing means (28).

4. A method for determining the quantity of a liquid in a liquid-containing tank (T) having at least two possible attitudes relative to the gravity vector and N liquid-level sensing probes $(S_1 \ldots S_n)$ in the tank T, each probe $(S_1 \ldots S_n)$ producing for each said attitude of the tank a respective output which varies in dependence on the fraction of it which is immersed in the liquid and which is related to the quantity of liquid in the tank in a manner dependent on the shape of the tank and the relative position of the probe within the tank, comprising the steps of storing, in each of a plurality of addressable storage locations, liquid-quantity-representing data corresponding to a particular output value of a respective one of the probes $(S_1 \ldots S_n)$, determining for each probe the output value representative of the fraction thereof which is immersed in the liquid at a particular time, responding to the particular said attitude of the tank (T), to the respective positions of the probes in the tank (T) and to the current said output values of each probe by accessing for each probe a respective one of the storage locations, and reading the data in each accessed storage location, and indicating the quantity of liquid in the tank (T) in response to all the read data, characterised by the steps of arranging the storage locations in groups one for each of the said attitudes of the tank, arranging them within sub-groups in each said group, one sub-group for each of the probes $(S_1 \ldots S_n)$, with the storage locations being arranged sequentially within each sub-group with one storage location therein for each of the output values of the respective probe $(S_1 \ldots S_n)$, and locating a particular one of the storage locations in response to each probe output value by means of a first address offset representative of the attitude of the tank so as to locate the corresponding group of storage locations, a second address offset representative of the position of the particular probe $(S_1 \ldots S_n)$ in the tank (T) so as to locate the corresponding sub-group, and an address within that sub-group dependent on the probe output value.

**Patentansprüche**

1. Vorrichtung zum Bestimmen der Flüssigkeitsmenge in einem Flüssigkeit enthaltenden Tank (T) mit mindestens zwei möglichen Lagen in bezug auf den Gravitationsvektor, mit n Flüssigkeitsstandfühlern $(S_1 \ldots S_n)$ in dem Tank (T), wobei jeder Fühler $(S_1 \ldots S_n)$ für jede Lage des Tanks (T) ein jeweiliges Ausgangssignal liefert, das in Abhängigkeit von dem Teil des Fühlers, der in die Flüssigkeit eingetaucht ist, variiert und das in einer Weise in Beziehung zu der Flüssigkeitsmenge in dem Tank (T) steht, die von der Form des Tanks (T) und der relativen Position des Fühlers in dem Tank (T) abhängt, auf die Ausgangssignale reagierende Bestimmungseinrichtungen (12, 18, 20, 22) zum Bestimmen eines Ausgangswerts für jeden Fühler, der denjenigen Teil des Fühlers angibt, der zu einem bestimmten Meßzeitpunkt in der Flüssigkeit eingetaucht ist, einer Speichereinrichtung (M) mit mehreren adressierbaren Speicherplätzen, die jeweils Flüssigkeitsmengenangabedaten für einen bestimmten Ausgangswert eines jeweiligen Fühlers $(S_1 \ldots S_n)$ speichern, einer Adressiereinrichtung (28), die auf die bestimmte Lage des Tanks (T), die jeweilige Position der Fühler in dem Tank (T) und die aktuellen Ausgangswerte jedes Fühlers reagiert, um für jeden Fühler auf einen bestimmten der Speicherplätze zuzugreifen und die Daten darin zu lesen, und eine auf alle gelesenen Daten reagierende Ausgabeeinrichtung zum Angeben der Flüssigkeitsmenge in dem Tank (T), dadurch gekennzeichnet, daß die Speicherplätze in Gruppen angeordnet sind, wobei jeweils eine Gruppe für jede der Lagen des Tanks vorgesehen ist, und innerhalb der Gruppen in Untergruppen angeordnet sind, wobei jeweils eine Untergruppe für jeden der Fühler ($S_1 ... ..S_n$) vorgesehen ist, wobei die Speicherplätze in jeder Untergruppe sequentiell angeordnet sind, wobei ein Speicherplatz darin für jeden der Ausgangswerte des jeweiligen Fühlers ($S_1 .....S_n$) vorgesehen ist, und daß die Adressiereinrichtung (28) einen bestimmten der Speicherplätze in Reaktion auf jeden Fühlerausgangswert durch einen ersten, die Lage des Tanks angebenden Adressen-Offset lokalisiert, um die entsprechende Gruppe von Speicherplätzen zu lokalisieren, einen zweiten, die Position des bestimmten Fühlers ($S_1 .....S_n$) in dem Tank (T) angebenden Adressen-Offset, um die entsprechende Untergruppe zu lokalisieren, und in Abhängigkeit von dem Fühlerausgangswert die Adresse in dieser Untergruppe lokalisiert.

2. Vorrichtung nach Anspruch 1, gekennzeichnet durch eine Akkumulatoreinrichtung, die über einen bestimmten Meßzeitraum die von den adressierten Speicherplätzen jedes der jeweiligen Fühler ($S_1 .....S_n$) erhaltenen Flüssigkeitswerte summiert.

3. Vorrichtung nach Anspruch 1 oder 2, dadurch gekennzeichnet, daß die Bestimmungseinrichtung eine durch ein gespeichertes Programm gesteuerte Prozessoreinrichtung (10) zum Bestimmen eines Werts aufweist, der denjenigen Teil jedes der Fühler ($S_1 .....S_n$) angibt, der in der Flüssigkeit eingetaucht ist, wobei die Prozessoreinrichtung ebenfalls die Adressiereinrichtung (28) aufweist.

4. Verfahren zum Bestimmen der Flüssigkeitsmenge in einem Flüssigkeit enthaltenden Tank (T) mit mindestens zwei möglichen Lagen in bezug auf den Gravitationsvektor und mit n Flüssigkeitsstandfühlern ($S_1 .....S_n$) in dem Tank (T), wobei jeder Fühler ($S_1 .....S_n$) für jede Lage des Tanks ein jeweiliges Ausgangssignal liefert, das in Abhängigkeit von dem Teil des Fühlers, der in die Flüssigkeit eingetaucht ist, variiert und das in einer Weise in Beziehung zu der Flüssigkeitsmenge in dem Tank steht, die von der Form des Tanks und der relativen Position des Fühlers in dem Tank abhängt, mit den Schritten des Speicherns von einem bestimmten Ausgangswert eines jeweiligen Fühlers ($S_1 .....S_n$) entsprechenden Flüssigkeitsmengenangabedaten in jedem von mehreren adressierbaren Speicherplätzen, Bestimmen des Ausgangswerts jedes Fühlers, der denjenigen Teil des Fühlers angibt, der zu einem bestimmten Zeitpunkt in der Flüssigkeit eingetaucht ist, Reagieren auf die bestimmte Lage des Tanks (T), die jeweilige Position der Fühler in dem Tank (T) und die aktuellen Ausgangswerte jedes Fühlers durch Zugreifen auf einen bestimmten der Speicherplätze für jeden Fühler und durch Auslesen der Daten in jedem der Speicherplätze, auf die zugegriffen wurde, und Angeben der Flüssigkeitsmenge in dem Tank (T) in Reaktion auf sämtliche ausgelesenen Daten, gekennzeichnet durch die Schritte des Anordnens der Speicherplätze in Gruppen, wobei jeweils eine Gruppe für jede der Lagen des Tanks vorgesehen ist, Anordnen der Speicherplätze innerhalb der Gruppen in Untergruppen, wobei jeweils eine Untergruppe für jeden der Fühler ($S_1 ... ..S_n$) vorgesehen ist, wobei die Speicherplätze in jeder Untergruppe sequentiell angeordnet sind, wobei ein Speicherplatz darin für jeden der Ausgangswerte des jeweiligen Fühlers ($S_1 .....S_n$) vorgesehen ist, und das Lokalisieren eines bestimmten Speicherplatzes in Reaktion auf jeden Fühlerausgangswert durch einen ersten, die Lage des Tanks angebenden Adressen-Offset, um die entsprechende Gruppe von Speicherplätzen zu lokalisieren, einen zweiten, die Position des bestimmten Fühlers ($S_1 .....S_n$) in dem Tank (T) angebenden Adressen-Offset, um die entsprechende Untergruppe zu lokalisieren, und Lokalisieren einer Adresse in dieser Untergruppe in Abhängigkeit von dem Fühlerausgangswert.

**Revendications**

1. Appareil pour déterminer la quantité d'un liquide dans un réservoir contenant un liquide (T) ayant au moins deux attitudes possibles par rapport au vecteur pesanteur, comprenant N sondes de détection de niveau de liquide ($S_1 ... S_n$) dans le réservoir (T), chaque sonde ($S_1 ... S_n$) produisant pour chacune desdites attitudes du réservoir (T) une sortie respective qui varie en fonction de sa fraction qui est immergée dans le liquide et qui se rapporte à la quantité de liquide dans le réservoir (T) d'une manière dépendant de la forme du réservoir (T) et de la position relative de la sonde à l'intérieur du réservoir (T), des moyens détermination (12,18,20,22) en réponse aux sorties pour déterminer pour chaque sonde une valeur de sortie représentative de sa fraction qui est immergée dans le liquide à un instant de mesure particulier, un moyen de mémoire (M) comportant un ensemble d'emplacements de mémorisation adressables mémorisant des données représentant la quantité de liquide pour une valeur de sortie particulière d'une des sondes respectives ($S_1$ ... $S_n$), un moyen d'adressage (28) en réponse à ladite attitude particulière du réservoir (T), aux positions respectives des sondes dans le réservoir (T) et auxdites valeurs de sortie de courant de chaque sonde pour accéder, pour chaque sonde, à une valeur respective des emplacements de mémorisation et pour y lire les données, et un moyen de sortie en réponse à toutes les données lues pour indiquer la quantité de liquide dans le réservoir (T), caractérisé en ce que les emplacements de mémorisation sont disposés en groupe, un groupe pour chacune desdites attitudes du réservoir et sont disposés en sous-groupes à l'intérieur de chacun desdits groupes, un sous-groupe pour chacune des sondes ($S_1$ ... $S_n$), avec les emplacements de mémorisation étant disposés séquentiellement à l'intérieur de chaque sous-groupe avec un emplacement de mémorisation à l'intérieur pour chacune des valeurs de sortie de la sonde respective ($S_1$ ... $S_n$), et en ce que le moyen d'adressage (28) situe un des emplacements de mémorisation particulier en réponse à chaque valeur de sortie de sonde au moyen d'un premier décalage d'adresse représentatif de l'attitude du réservoir de façon à situer le groupe correspondant des emplacements de mémorisation, un second décalage d'adresse représentatif de la position de la sonde particulière ($S_1$ ... $S_n$) dans le réservoir (T) afin de situer le sous-groupe correspondant, et une adresse à l'intérieur de ce sous-groupe en fonction de la valeur de sortie de la sonde.

2.    Appareil selon la revendication 1, caractérisé en ce qu'un moyen d'accumulation pour additionner, pour un instant de mesure particulier, les valeurs de quantité de liquide obtenues à partir des emplacements de mémorisation adressés respectifs à chacune des sondes ($S_1$ ... $S_n$).

3.    Appareil selon la revendication 1 ou 2, caractérisé en ce que le moyen de détermination comprend un moyen formant processeur (10) commandant un programme mémorisé pour déterminer une valeur représentative de la fraction de chacune desdites sondes ($S_1$ ...

$S_n$) immergées dans le liquide, le moyen formant processeur incorporant de même le moyen d'adressage (28).

4.    Procédé pour déterminer la quantité d'un liquide dans un réservoir contenant un liquide (T) comportant au moins deux attitudes possibles par rapport au vecteur pesanteur et N sondes de détection de niveau de liquide ($S_1$ ... $S_n$) dans le réservoir T, chaque sonde ($S_1$ ... $S_n$) produisant pour chacune desdites attitudes du réservoir une sorte respective qui varie en fonction de sa fraction qui est immergée dans le liquide et qui se rapporte à la quantité de liquide dans le réservoir d'une manière dépendant de la forme du réservoir et de la position relative de la sonde à l'intérieur du réservoir, comprenant les étapes consistant à mémoriser, dans chacun d'un ensemble d'emplacements de mémorisation adressables, les données représentant la quantité de liquide correspondant à une valeur de sortie particulière d'une des sondes respective ($S_1$ ... $S_n$), déterminant pour chaque sonde la valeur de sortie représentative de sa fraction qui est immergée dans le liquide à un instant particulier, répondant à ladite attitude particulière du réservoir (T), aux positions respectives des sondes dans le réservoir (T) et auxdites valeurs de sortie de courant de chaque sonde en accédant pour chaque sonde à un des emplacements respectifs de mémorisation, et en lisant la donnée dans chaque emplacement de mémorisation accédé, et indiquant la quantité de liquide dans le réservoir (T) en réponse à toutes les données lues, caractérisé par les étapes de disposition des emplacements de mémorisation en groupes, un pour chacune desdites attitudes du réservoir, les disposant à l'intérieur de sous-groupes dans chacun desdits groupes, un sous-groupe pour chacune des sondes ($S_1$ ... $S_n$), avec les emplacements de mémorisation étant disposés séquentiellement à l'intérieur de chaque sous-groupe avec un emplacement de mémorisation à l'intérieur pour chacune des valeurs de sortie de la sonde respective ($S_1$ ... $S_n$), et de repérage d'un des emplacements particuliers de mémorisation en réponse à chaque valeur de sortie de la sonde au moyen d'un premier décalage d'adresse représentatif de l'attitude du réservoir de façon à situer le groupe correspondant d'emplacements de mémorisation, un second décalage d'adresse représentatif de la position de la sonde particulière ($S_1$ ... $S_n$) dans le réservoir (T) de façon à situer le sous-groupe correspondant, et une adresse à l'intérieur de ce sous-groupe en fonction de la valeur de sortie de sonde.

FIG. 1.

| ADDRESS (DEC) | QUANTITY VOL. UNITS |
|:---:|:---:|
| 0000 | 0 |
| 0001 | 5 |
| 0002 | 10 |
| 0003 | 15 |
| 0004 | 20 |
| 0005 | 0 |
| 0006 | 2 |
| 0007 | 4 |
| 0008 | 8 |
| 0009 | 16 |
| 0010 | 0 |
| 0011 | 1 |
| 0012 | 2 |
| 0013 | 3 |
| 0014 | 6 |
| 0015 | 0 |
| 0016 | 8 |
| 0017 | 13 |
| 0018 | 18 |
| 0019 | 23 |
| 0020 | 0 |
| 0021 | 4 |
| 0022 | 6 |
| 0023 | 10 |
| 0024 | 18 |
| 0025 | 0 |
| 0026 | 1 |
| 0027 | 3 |
| 0028 | 6 |
| 0029 | 12 |

FIG.2

FIG. 3.

Flowchart contents:

INITIATE LIQUID LEVEL DETERMINATION

STORE ZERO TO N, ADDR

SYSTEM ATTITUDE ?

AIR branch:

STORE SYSTEM OFFSET IS TO ADDR

STORE 1+N TO N

STORE GROUP OFFSET (5*N)+ADDR TO ADDR

DETERMINE NORMALIZED (0→1·0) LIQUID LEVEL FOR SENSOR PROBE $S_n$ AND STORE TO C

STORE ADDR + (5*C) TO ADDR

ADDRESS MEMORY M AND STORE OBTAINED LIQUID QUANTITY DATA TO $Q_N$

STORE 1+N TO N

IS N > UPPER LIMIT ?

GND branch:

STORE SYSTEM OFFSET 0 TO ADDR

STORE 1+N TO N

STORE GROUP OFFSET (5*N)+ADDR TO ADDR

DETERMINE NORMALIZED (0→1·0) LIQUID LEVEL FOR SENSOR PROBE $S_n$ AND STORE TO C

STORE ADDR + (5*C) TO ADDR

ADDRESS MEMORY M AND STORE OBTAINED LIQUID QUANTITY DATA TO $Q_N$

STORE 1+N TO N

IS N > UPPER LIMIT ?

SUM LIQUID QUANTITY DATA $Q_1, Q_2 ... Q_N$ AND PROVIDE TO OUTPUT DEVICE